## Europäisches Patentamt
## European Patent Office
## Office européen des brevets

(11) Publication number: **0 024 778**
**B1**

(12) **EUROPEAN PATENT SPECIFICATION**

(45) Date of publication of patent specification: **21.09.83**

(21) Application number: **80200825.0**

(22) Date of filing: **02.09.80**

(51) Int. Cl.³: **G 01 K 17/08,**
**G 01 K 17/06**

(54) Heat consumption meter.

(30) Priority: **03.09.79 NL 7906591**

(43) Date of publication of application:
**11.03.81 Bulletin 81/10**

(45) Publication of the grant of the patent:
**21.09.83 Bulletin 83/38**

(84) Designated Contracting States:
**AT BE CH DE GB LI NL SE**

(56) References cited:
**DE - A - 2 526 828**
**DE - C - 356 313**
**DE - C - 389 380**
**DE - C - 917 459**
**FR - A - 735 709**
**FR - A - 806 033**
**US - A - 4 085 613**

(73) Proprietor: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague (NL)**

(72) Inventor: **Graaf Van Der, Frederik**
**Drogendijk 3**
**NL-3214 LC Zuidland (NL)**

(74) Representative: **van der Beek, George Frans et al, Nederlandsch Octrooibureau Johan de Wittlaan 15 P.O. Box 29720**
**NL-2502 LS Den Haag (NL)**

Courier Press, Leamington Spa, England.

**0 024 778**

Heat consumption meter

The invention relates to a device for measuring the quantity of free heat instantaneously supplied to or withdrawn from an installation by a fluid medium, which installation is provided with a supply conduit for supplying the medium and with a return conduit for withdrawing the medium, the said device comprising a heat exchanger having two channels one of which forms part of a by-pass line connected to the supply conduit and the other channel forms part of a bypass line connected to the return conduit, the medium flowing in opposite directions in the two channels and entering one of these channels and leaving the other one at the same location, and a measuring means outside the heat exchanger for measuring the difference between the temperature of the flowing medium entering the heat exchanger and the temperature of the flowing medium leaving the heat exchanger at the same location, which temperature difference is approximately proportional to the quantity of heat to be measured.

In technical practice it is frequently found desirable to determine the quantity of free heat supplied to or withdrawn from an installation by a fluid medium in the course of a period of time. As examples of such installations there may be mentioned central heating installations to which hot water or a hot gas is supplied and cooling installations through which cooled brine or an other refrigerated liquid is passed. The invention however, does not relate to central heating installations operated on steam or cooling installations to which liquid ammonia is supplied because in such installations not only the free heat but also the heat of condensation or the heat of evaporation, respectively, play an important role.

Assuming that in installations with which the present invention is concerned the specific weight and the specific heat of the medium in the supply conduit equal those in the return conduit the instantaneous positive or negative thermal energy consumption of an installation may be determined from the difference in temperature of the medium in the supply conduit and in the return conduit and the flow rate of the medium in the supply conduit or the return conduit. The instantaneous positive or negative heat consumption, respectively, equals the product of the difference in temperature measured, the flow rate, the density and the specific heat of the medium. The total consumption over a period of time is determined by integrating the instantaneous consumption over this period of time in a way known per se.

For purpose of illustration of the invention will be elucidated hereinafter only with respect to heat consumption, i.e. a positive heat consumption, though it will be clear that the same applies to a negative heat consumption so that the following disclosure also applies to for instance installations refrigerated by means of a cooled brine.

For a long time already research has been directed to devices for measuring the instantaneous heat consumption in which such consumption is not determined by the product of a separately measured temperature difference and flow rate but is derived from one single measured quantity.

The device described at the beginning of this specification is known from French patent specification 735 709. According to this French patent specification there is a conduit 1 for supplying medium to an installation, a conduit 2 for withdrawing the said medium from the installation, a heat exchanger 5 one channel of which forms part of a by-pass line connected to the one conduit 1, the other channel of which forms part of a by-pass line 4 connected to the other channel, the medium in both channels flowing in counter current, and means 6, 7 for measuring the difference between the temperature of the flow entering the heat exchanger and the temperature of the flow leaving the heat exchanger on the same spot, said means being arranged outside the heat exchanger 5.

Although it is stated in this French patent specification that the quantity of heat delivered to the installation is proportional to the temperature difference measured by the means 6, 7, this is not always true. First, it has been found that a fair approximation of the said relationship between the quantity of heat and the temperature difference can only be achieved if the two flows passing through the two channels of the heat exchanger are substantially alike. Secondly, it has been found that for achieving the said fair approximation it is also essential that some requirements are met which will be specified below.

The invention therefore relates to a device of the above described type, said device being characterized in that the device is designed in such a manner that the two flows passing through the said heat exchanger are at any flow rate substantially alike and that

$$z=\frac{k \cdot \phi \cdot \rho \cdot c}{\alpha_w \cdot F_w + \alpha_{ws} \cdot F_{ws}} \ll 1$$

wherein:

$\phi$=the quantity of medium flowing through the installation per unit of time ($m^3$/sec);
k=the fraction of $\phi$ flowing through each by-pass line;
$\rho$=the density of the medium (kg/$m^3$);
c=the specific heat of the medium (J/kg . K);

2

**0 024 778**

$\alpha_w$=the coefficient of heat transmission of the heat exchanger (W/m$^2$ . K);
$\alpha_{ws}$=the coefficient of heat transmission of the measuring means (W/m$^2$ . K);
$F_w$=the heat exchanging area of the heat exchanger (m$^2$);
$F_{ws}$=the heat exchanging area of the measuring means (m$^2$).

It has been considered that the requirement of equal flows in both channels of the (first) heat exchanger is always met if these two channels are arranged in series. However, this necessitates a different construction of the device, e.g. a second heat exchanger mounted between the two channels of the first heat exchanger, while further conditions which will be specified below, have to be fulfilled.

The invention therefore also relates to a device for measuring the quantity of free heat instantaneously supplied to or withdrawn from an installation by a fluid medium, which installation is provided with a supply conduit for supplying the medium and with a return conduit for withdrawing the medium, the said device comprising a first heat exchanger having two channels one of which forms part of a by-pass line connected to one of said conduits, the medium flowing in opposite directions in the two channels and entering one of these channels and leaving the other one at the same location, and a measuring means outside the first heat exchanger for measuring the difference between the temperature of the flowing medium entering the first heat exchanger and the temperature of the flowing medium leaving the first heat exchanger at the said location, which temperature difference is approximately proportional to the quantity of heat to be measured, characterized in that in the by-pass line the two channels of the first heat exchanger and the first channel of a second heat exchanger are arranged in series with each other so that the two flows passing through the two channels of the first heat exchanger and the flow through the first channel of the second heat exchanger are substantially alike at any flow rate, the first channel of said second heat exchanger being located between the two channels of said first heat exchanger while the second channel of said second heat exchanger forms part of the other conduit or of a further by-pass line connected thereto, and that

$$\frac{1}{1-e^{-p}} . z \ll 1$$

wherein:
$z$=the quantity defined in claim 1, whereby the heat exchanger is the first heat exchanger;
$e$=the base number of the Napierian logarithm;

$$p=\frac{\alpha_r . F_r}{k . \phi . \rho . c}$$

wherein:
$\alpha_r$=the coefficient of heat transmission of the second heat exchanger;
$F_r$=the heat exchanging area of the second heat exchanger and $\phi$, $\rho$ and c are as defined in claim 1;
$k$=the fraction of $\phi$ flowing through the by-pass line.

Furthermore it is preferred that the measuring means comprises one or a plurality of thermo-couples arranged in series electrically (thermo-pile).

The invention will now be described with reference to the drawings, in which
Fig. 1 diagrammatically shows how the heat consumption of an installation may be determined,
Fig. 2 represents a first embodiment of a device according to the invention,
Fig. 3 represents a second embodiment of a device according to the invention,
Fig. 4 shows the course of the temperature in a device according to Fig. 2,
Fig. 5 shows the course of the temperature in a device according to Fig. 3,
Fig. 6 shows an embodiment of a heat exchanger for use in a device according to the invention,
Fig. 7 represents an embodiment of the device according to the invention having a thermal screen,
Fig. 8 represents the course of the temperature in the device of Fig. 7,
Fig. 9 shows a variation of the device according to the invention as shown in Fig. 3,
Fig. 10 shows a modification of the device according to the invention as shown in Fig. 9,
Fig. 11 represents a perspective side elevation partially cut away of a device according to the invention, and
Fig. 12 shows a diagram representing the relation between the output potential of a thermo-pile and the flow rate in the device of Fig. 11.

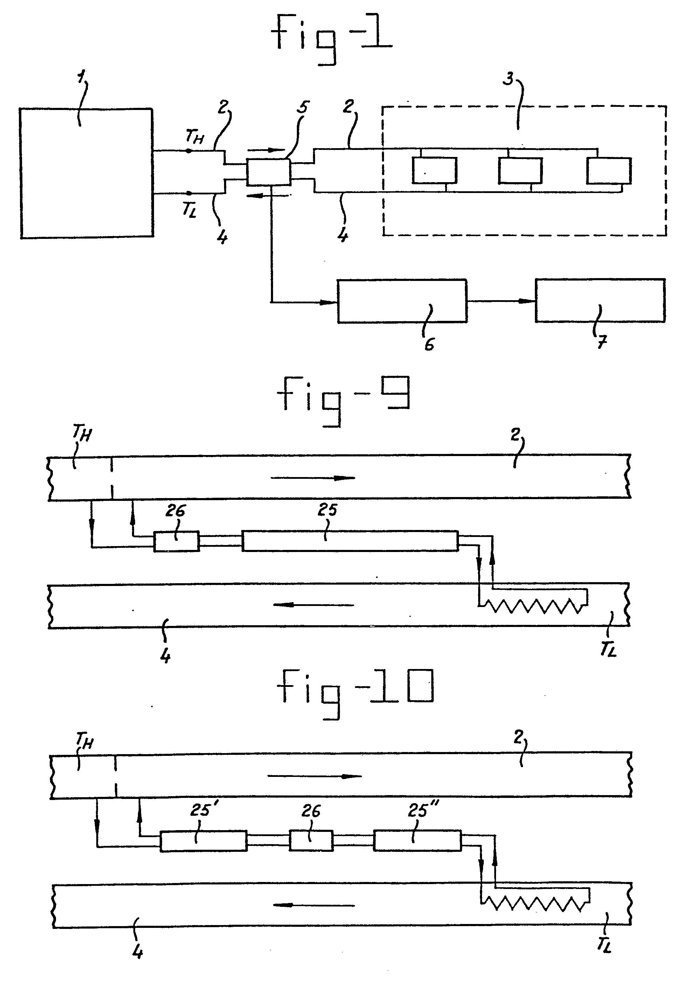

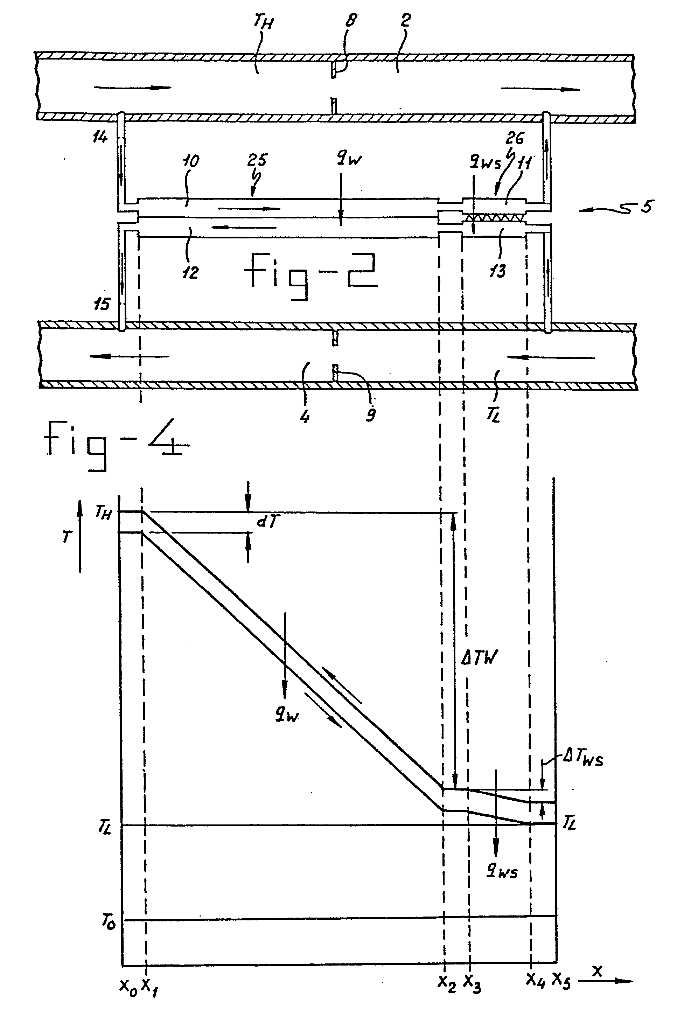

With reference to Fig. 1 there is shown diagrammatically a source of heat 1 heating a liquid medium. By way of a supply conduit 2 the heated medium at a temperature $T_H$ and a flow rate $\phi$ is supplied to a heat consuming installation 3. The medium cooled down to a temperature $T_L$ in this installation 3 is returned by way of a return conduit 4 to the source of heat 1.

The supplied flow of medium as well as the return flow are passed through a consumption meter 5 emitting an electric signal V which signal is proportional to the instantaneous heat consumption.

3

$$V = K \cdot \phi \cdot \rho \cdot c(T_H - T_L).$$

This electric signal V is transmitted to an integrator 6 integrating the potential V over a period between the point of time $t_1$ and $t_2$. The integral

$$\int_{t_1}^{t_2} V \cdot dt = K \int_{t_1}^{t_2} \phi(T_H - T_L) \cdot \rho \cdot c \cdot dt$$

indicates the total consumption within the said period and may for instance be read on a display device 7.

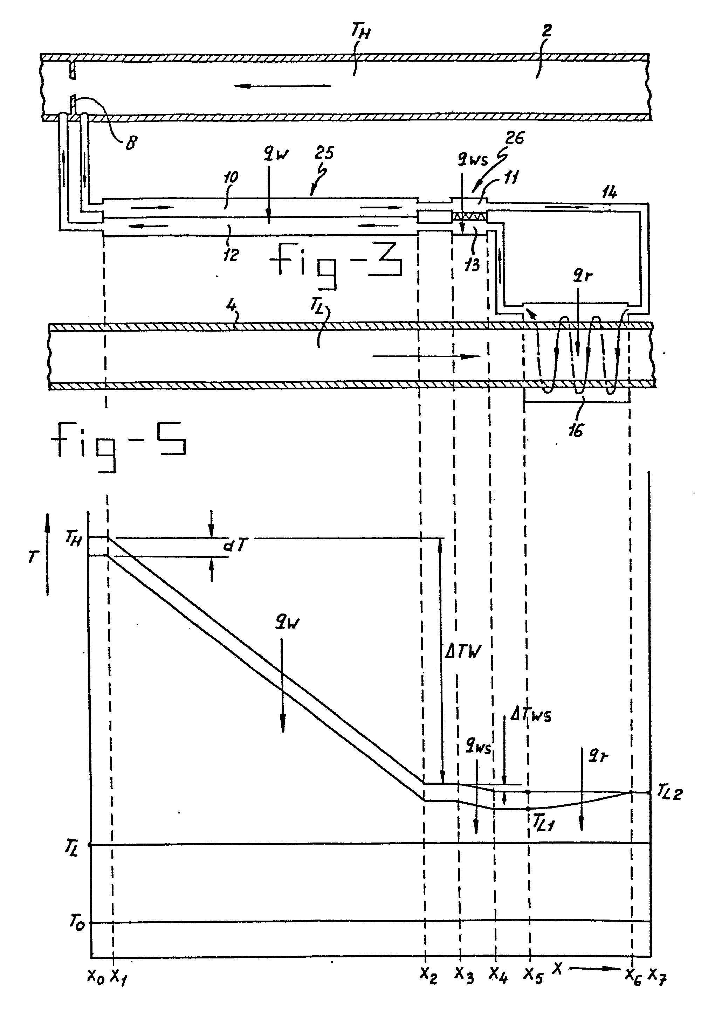

With reference to Fig. 2 there is shown the heat consumption meter indicated diagrammatically at 5 in Fig. 1 in a more detailed manner. The supply conduit 2 includes a constriction 8. By-passing the constriction 8 there is provided a by-pass line comprising among others the channel 10 of a heat exchanger 25 and the channel 11 of a temperature differential meter 26. This by-pass line includes furthermore a constriction 14. By-passing the constriction 9 in the return line 4, there is provided a by-pass line comprising among others a channel 12 of the said heat exchanger and the channel 13 of the said temperature differential meter 26. This by-pass line furthermore includes a constriction 15.

The constrictions and the by-pass lines have been dimensioned such that at a varying flow rate of the medium the ratio between the sizes of the flow in the supply conduit and the return conduit, respectively, and that of the flows in the associated by-pass lines, is constant. The said constrictions and by-pass lines have furthermore been dimensioned such that the flows in the two by-pass lines are at any rate approximately equal.

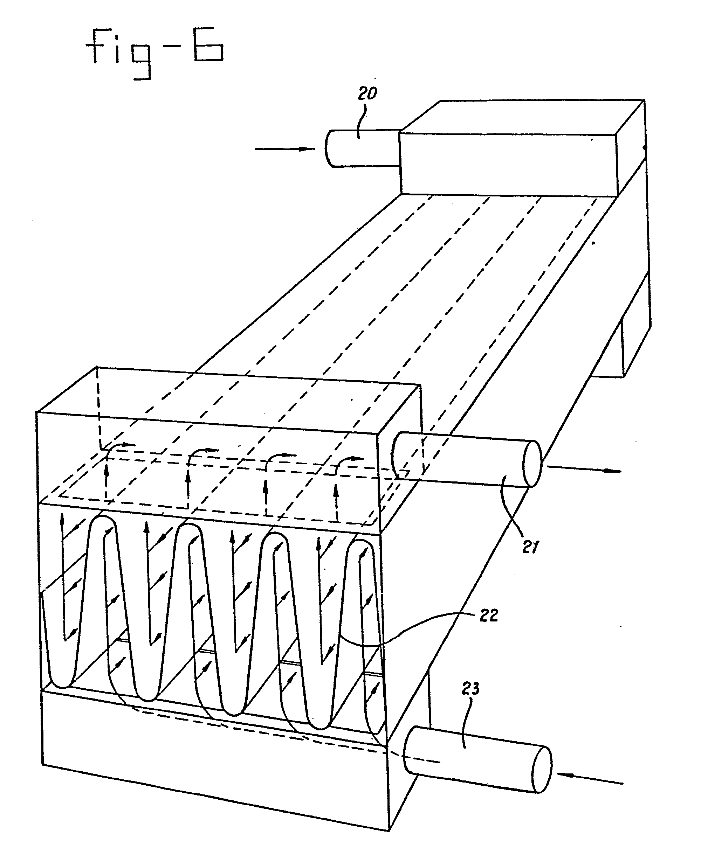

Fig. 4 shows the course of the temperature of the medium in the two by-pass lines of the device shown in Fig. 2, for that matter as a function of the flow path x in the respective by-pass lines. From this figure it is apparent that along the entire flow path the difference between the temperatures of the flows of the medium in the two by-pass lines is substantially constant.

It will be demonstrated below that this temperature difference is a measure for the heat consumption to be measured.

Where it will not be easy to construct the device according to Fig. 2 in such a manner that the flows in the two by-pass lines will be substantially equal to any flow rate there have been designed a variation shown in Fig. 3 of the device according to Fig. 2 in which the two channels 10 and 12 of the heat exchanger are arranged in series thus assuring that the flows through these two channels will always be equal. Between the channels 10 and 11 of the heat exchanger 25 arranged in series and the associated channels 11 and 13 of the temperature differential meter 26 there is arranged a second heat exchanger or return heat exchanger 16 in which the flow of medium leaving the channels 10 and 11 are brought into heat exchanging relation with the medium in the return conduit 4. Instead of within the return conduit 4 per se the heat exchanger 16 may also be provided in a by-pass line connected to the return conduit.

With reference to Fig. 5 there is shown the course of the temperature of the flow of medium through the device shown in Fig. 3, for that matter as a function of the flow path x. In order to facilitate a comparison with Fig. 4 the flow path downstream of the second (return) heat exchanger has been plotted in the inverse direction.

If heat losses to the surroundings and conduction in longitudinal direction within the heat exchanger are not taken into consideration, the following relations will hold for the device shown in Fig. 3:

$$q_w = \alpha_w \cdot F_w \cdot dT \tag{1}$$
$$q_{ws} = \alpha_{ws} \cdot F_{ws} \cdot dT \tag{2}$$
$$q_w = k \cdot \phi \cdot \rho \cdot c \cdot \Delta T_w \tag{3}$$
$$q_{ws} = k \cdot \phi \cdot \rho \cdot c \cdot \Delta T_{ws} \tag{4}$$

$$\frac{T_{L_2} - T_{L_1}}{T_{L_2} - T_L} = 1 - e^{-p} \tag{5}$$

in which:

$$p = \frac{\alpha_r \cdot F_r}{k \cdot \phi \cdot \rho \cdot c} \tag{6}$$

4

From these relations there may be derived:

$$q_{ws}=k . \phi . \rho . c(T_H-T_L) . \frac{\alpha_{ws} . F_{ws}}{\alpha_w . F_w+\alpha_{ws} . F_{ws}} . \frac{1}{(1+\frac{1}{1-e^{-p}} . z)} \qquad (7)$$

in which:

$$z=\frac{k . \phi . \rho . c}{\alpha_w . F_w+\alpha_{ws} . F_{ws}} \qquad (8)$$

By selecting p and z such that:

$$\frac{1}{1-e^{-p}} . z<<1 \qquad (9)$$

relation (7) changes into:

$$q_{ws}=k . \phi . \rho . c(T_H-T_L) . \frac{\alpha_{ws} . F_{ws}}{\alpha_w . F_w+\alpha_{ws} . F_{ws}} \qquad (10)$$

or

$$q_{ws}=K_1 . \phi . \rho . c(T_H-T_L) \qquad (11)$$

or by combining relation (11) with relation (2)

$$dT=K_2 . \phi . \rho . c(T_H-T_L) \qquad (12)$$

The temperature difference dT measured by the temperature differential meter is thus proportional to the instantaneous heat consumption provided the requirement of relation (9) is met. The term

$$\frac{1}{1-e^{-p}}$$

in (6) is always larger than 1. When selecting for instance

$$p=5, \frac{1}{1-e^{-p}}\simeq1 \qquad (13)$$

so that there will then yet remain as a requirement $z<<1$.

The requirements stated for p and z may be met for instance by adjusting the constrictions to a value of k which is in agreement with the range of the flow rate to be expected. At $z<<1$ there applies

$$z=\frac{dT}{T_H-T_L}$$

Stated otherwise dT amounts to only a fraction of the difference between the supply temperature and the return temperature of the medium. A practical solution may then for instance be the use of a thermo-pile in order to make a sufficient measuring signal available nevertheless.

The result will then be:

$$V=K_3 . \phi . \rho . c(T_H-T_L) \qquad (14)$$

The relations applying to the device shown in Fig. 2 may be found by substituting in the relations derived for the device according to Fig. 3:

5

$$T_{L1}=T_L \tag{15}$$

whereby (5) changes into

$$1-e^{-p}=1 \tag{16}$$

The relations (12), (13) and (14) apply also for the device shown in Fig. 2. The requirement indicated in (9) is however simplified to the requirement of (13).

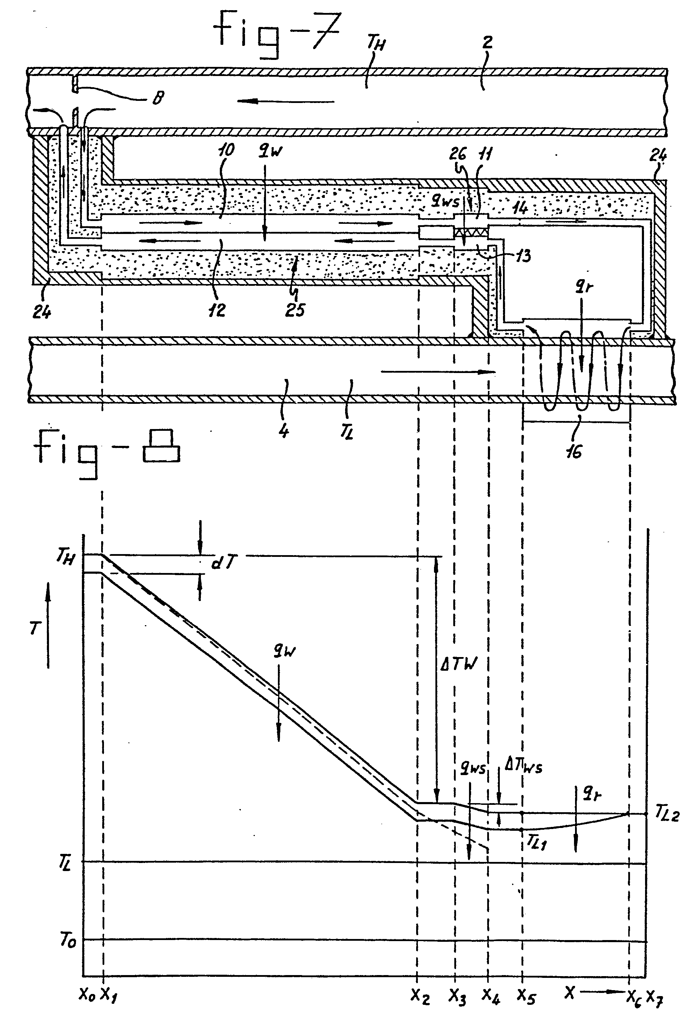

It has been remarked above that the above derived relations only apply if it is assumed among others that no transmission of heat in the longitudinal direction occurs within the heat exchanger. With reference to Fig. 6 there is shown diagrammatically a heat exchanger in which the transmission of heat in the longitudinal direction is reduced to a minimum. This heat exchanger consists of a box divided into two approximately equal spaces by means of a foil consisting of a material having a good heat conductivity. For enlarging the surface area of the foil it is preferred to provide the foil with a number of parallel foils shirred like the bellows of an accordion. Each one of the two spaces into which the box has been divided is provided with an inlet and an outlet, that is to say in such a manner that the flow in the one space will be in the opposite direction with respect to the flow in the other space. The upper space has an inlet 20 and an outlet 21 whereas the lower space separated by means of the foil 22 from the upper space has an inlet 23 and an outlet not shown in the drawing but present at the left hand side in the rear.

It is also possible to restrict the conduction of heat in the longitudinal direction within the heat exchanger by building the heat exchanger of a plurality of approximately similar elements which elements are arranged consecutively in the direction of the flow and consists alternating of a thermally well conducting material and of a thermally badly conducting material, respectively, or by applying a known heat exchanger comprising a plurality of foils stacked into each other between which foils there are spaces through which alternatingly the one and the other flowing medium will flow.

Furthermore it has been assumed above that no heat exchange will occur with respect to the surroundings. In practice, however, heat will dissipate with certainty to the surroundings and even at an increasing rate if the difference between the mean temperature of a flow of medium in the device and the temperature of the surroundings $T_0$ becomes larger. The exchange of heat with the surroundings may be restricted by enclosing the device according to the invention with an insulating material while it is furthermore very effective to enclose the device by a shell the temperature of which at any location substantially equals the mean of the temperatures of the flows of medium present at that location within said shell. Such a shell may be obtained by enclosing the device according to the invention with an envelope of thermally well conductive material the thickness of which is reciprocally proportional to the temperature gradient to be expected of the mean of the temperatures of the flows of medium present at that location within the shell, which shell furthermore at the one extremity thereof is arranged in good thermal contact with the supply conduit and at the other extremity thereof with the return conduit. Such a shell manufactured of copper for instance and indicated in Fig. 7 at 24 encloses the device 5 according to the invention and is in good thermal contact with both the supply conduit 2 and with the return conduit 4 for the medium. The shell 24 as well as the device 5 are completely embedded within an insulating material (indicated by the speckled surface).

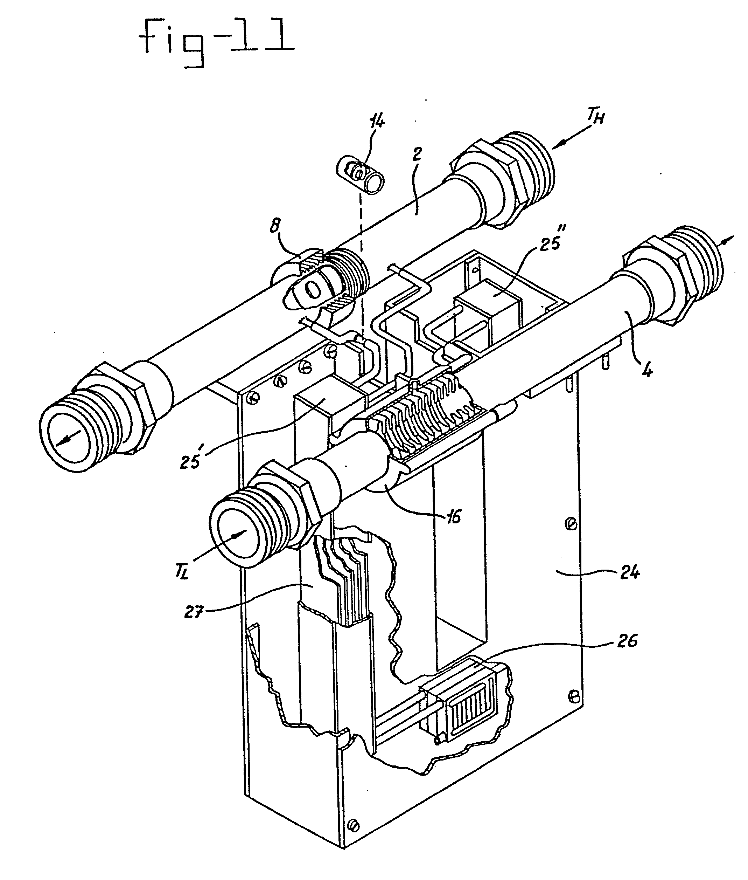

With reference to Fig. 8 there is shown the temperature profile of the device shown in Fig. 7. The two obliquely running uninterrupted lines indicate the temperatures within the two branches of the device 5 shown in Fig. 7 whereas the dash line indicates the temperature of the shell 24 shown in Fig. 7. It will be appreciated that the temperature of the shell coincides almost everywhere with those of the flows of medium so that there will be substantially no heat exchange between the shell and these flows.

In the device shown in Fig. 3 the by-pass line is connected to the supply conduit for the medium whereas the second (return) heat exchanger is in thermal contact with the return conduit for the medium. This device may however also be designed in the inverse manner, that is to say such that the by-pass line is connected to the return conduit for the medium and that the second heat exchanger is in thermal contact with the supply conduit for the medium.

Furthermore the order indicated in Figs. 2 and 3 of the first heat exchanger 25 and the temperature differential meter 26 may be reversed in such a manner that the partial flow of the medium derived from the supply conduit first passes through the temperature differential meter 26 and only thereafter through the first heat exchanger 25. Such a variation of the device shown in Fig. 3 has been represented in Fig. 9 in which the order of the heat exchanger and the temperature differential meter has been inversed.

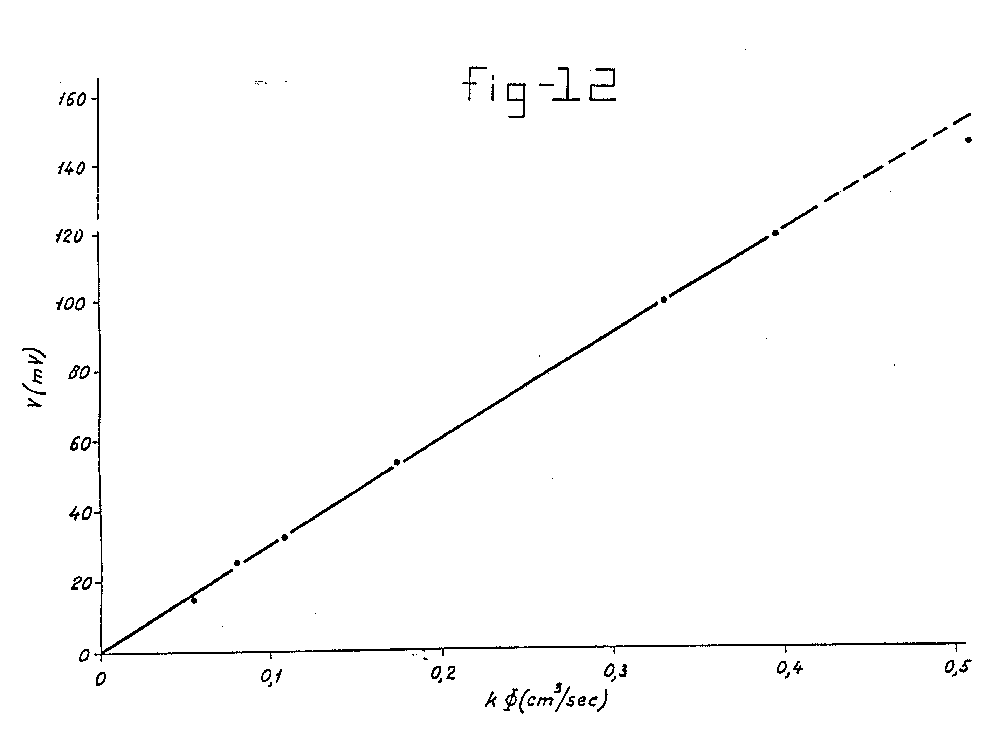

Finally it is also possible to build a first heat exchanger 25 not only of a plurality of partial heat exchangers 25', 25'' arranged in series but also to insert the temperature differential meter 26 between two of these partial heat exchangers. Fig. 10 shows diagrammatically how such may be realized in the device shown in Fig. 3. In this case the heat differential meter 26 is accommodated between two partial heat exchangers 25' and 25''.

With reference to Fig. 11 there is shown a perspective side elevation partially cut away of a device according to the invention made in accordance with the design of Fig. 10 and destined for measuring the instantaneous heat consumption of an installation operated on hot water.

Hot water at a temperature $T_H$ is supplied to an installation (not shown in the drawing) by way of the conduit 2. Slightly cooled water at a temperature $T_L$ is returned by way of the return conduit 4. In the conduit 2 there is provided an interchangeable flange having a constriction 8. Upstream and downstream of this flange a by-pass line is connected to the conduit 2 in which by-pass line there has been accommodated a flange having a constriction 14. Water in this by-pass line flows by way of the branching provided in the drawing on the right hand side of the constriction 8 through the two partial heat exchangers 25 and the temperature differential meter 26 arranged in between while entering thereupon the second (return) heat exchanger 16 in which heat exchanger occurs with the water flowing through the return conduit 4, then passing through the partial heat exchangers 25 and the temperature differential meter 26 in the reverse order and finally arriving again in the conduit 2 through the branching shown at the left hand side of the constriction 8 in the drawing.

In the temperature differential meter 26 there is provided a thermo-pile. At 27 there may be seen part of the lamellae constituting the heat exchangers 25.

The device shown in Fig. 11 the height of which amounts to about 20 cm is completely enclosed by a thermally insulating material and accommodated together with this material in a copper box 24. This copper box 24 is arranged in good thermal contact with the conduits 2 and 4. The thickness of the bottom of the box is considerably larger than that of the side walls.

The diagram of Fig. 12 relates to measurements performed with the device shown in Fig. 11. Along the vertical axis there is plotted the output potential (V in mV) of the thermo-pile in the temperature differential meter 26 and on the horizontal axis there is plotted the amount of water flowing through the heat exchangers per unit of time ($k\phi$ in cm²/sec). During the measurement $T_H$ and $T_L$ were kept constant at 50°C and 20°C, respectively. The ambient temperature also amounted to 20°C. From the diagram it is apparent that there is a substantially linear relation between V and $k\phi$.

List of symbols used

$\alpha_w$ coefficient of heat transmission of the heat exchanger [W/m² . K].

$\alpha_{ws}$ coefficient of heat transmission of the temperature differential meter [W/m² . K].

$\alpha_r$ coefficient of heat transmission of the second (return) heat exchanger [W/m² . K].

c specific heat of medium [J/kg/ . K].

dT temperature difference between the primary and secondary part of the first heat exchanger and in the temperature differential meter [°C].

e base of the Napierian logarithm.

$F_w$ heat exchanging area of the first heat exchanger [m²].

$F_{ws}$ heat exchanging area of the temperature differential meter [m²].

$F_r$ heat exchanging area of the second (return) heat exchanger [m²].

K proportion constant.

$K_1$ proportion constant.

$K_2$ proportion constant.

$K_3$ proportion constant.

k fraction of $\phi$ in the by-pass line.

$$p \frac{\alpha_r . F_r}{k . \phi . \rho . c}$$

$q_w$ heat exchanged by the first heat exchanger [W].

$q_{ws}$ heat exchanged by the temperature differential meter [W].

$q_r$ heat exchanged by the second (return) heat exchanger [W].

r second (return) heat exchanger.

$T_H$ temperature of the supplied medium [K].

$T_L$ temperature of the return medium [K].

$T_{L_1}$ temperature of the medium at the exit of the second (return) heat exchanger [K].

$T_{L_2}$ temperature of the medium at the entrance of the second (return) heat exchanger [K].

$\Delta T_w$ fall (raise) in temperature in the primary (secondary) side of the first heat exchanger (w) [°C].

$\Delta T_{ws}$ fall (raise) in temperature in the primary (secondary) side of the temperature differential meter (ws) [°C].

$t_1$ point of time of commencement of measuring the heat consumption.

$t_2$ point of time of the end of measurement of the heat consumption.

V electric signal transmitted by the thermo-pile [mV].

ws temperature differential meter.

w first heat exchanger.

$x_n$ location co-ordinate in the temperature profile curve corresponding with a location in the heat consumption meter.

$$z=\frac{k \cdot \phi \cdot \rho \cdot c}{\alpha_w \cdot F_w + \alpha_{ws} \cdot F_{ws}}$$

$\phi$ flow rate of the medium in the heating circuit [m³/sec].
$\rho$ density of the medium [kg/m³].

## Claims

1. A device for measuring the quantity of free heat instantaneously supplied to or withdrawn from an installation (1) by a fluid medium, which installation is provided with a supply conduit (2) for supplying the medium and with a return conduit (4) for withdrawing the medium, the said device comprising a heat exchanger (25) having two channels (10, 12) one of which forms part of a by-pass line (10, 11) connected to the supply conduit and the other forms part of a by-pass line (12, 13) connected to the return conduit, the medium flowing in opposite directions in the two channels and entering one of these channels and leaving the other one at the same location, and a measuring means (26) outside the heat exchanger (25) for measuring the difference between the temperature of the flowing medium entering the heat exchanger and the temperature of the flowing medium leaving the heat exchanger at the said location, which temperature difference is approximately proportional to the quantity of heat to be measured, characterized in that the device is designed in such a manner that the two flows passing through the said heat exchanger (25) are at any flow rate substantially alike and that

$$z=\frac{k \cdot \phi \cdot \rho \cdot c}{\alpha_w \cdot F_w + \alpha_{ws} \cdot F_{ws}}<<1$$

wherein:

$\phi$=the quantity of medium flowing through the installation per unit of time (m³/sec);
k=the fraction of $\phi$ flowing through each by-pass line;
$\rho$=the density of the medium (kg/m³);
c=the specific heat of the medium (J/kg . K);
$\alpha_w$=the coefficient of heat transmission of the heat exchanger (W/m² . K);
$\alpha_{ws}$=the coefficient of heat transmission of the measuring means (W/m² . K);
$F_w$=the heat exchanging area of the heat exchanger (m²);
$F_{ws}$=the heat exchanging area of the measuring means (m²).

2. A device for measuring the quantity of free heat instantaneously supplied to or withdrawn from an installation (1) by a fluid medium, which installation is provided with a supply conduit (2) for supplying the medium and with a return conduit (4) for withdrawing the medium, the said device comprising a first heat exchanger (25) having two channels (10, 12) one of which forms part of a by-pass line (10—13) connected to one of said conduits, the medium flowing in opposite directions in the two channels and entering one of these channels and leaving the other one at the same location, and a measuring means (26) outside the first heat exchanger (25) for measuring the difference between the temperature of the flowing medium entering the first heat exchanger and the temperature of the flowing medium leaving the first heat exchanger at the said location, which temperature difference is approximately proportional to the quantity of heat to be measured, characterized in that in the by-pass line the two channels (10, 12) of the first heat exchanger (25) and the first channel of a second heat exchanger (16) are arranged in series with each other so that the two flows passing through the two channels of the first heat exchanger and the flow through the first channel of the second heat exchanger are substantially alike at any flow rate, the first channel of said second heat exchanger being located between the two channels (10, 12) of said first heat exchanger (25) while the second channel of said second heat exchanger (16) forms part of the other conduit (4) or of a further by-pass line connected thereto, and that

$$\frac{1}{1-e^{-p}} \cdot z<<1$$

wherein:

z=the quantity defined in claim 1, whereby the heat exchanger is the first heat exchanger;
e=the base number of the Napierian logarithm;

$$p=\frac{\alpha_r \cdot F_r}{k \cdot \phi \cdot \rho \cdot c}$$

wherein:

$\alpha_r$=the coefficient of heat transmission of the second heat exchanger;

$F_r$=the heat exchanging area of the second heat exchanger, $\phi$, $\rho$ and c are as defined in claim 1; and

k=the fraction of $\phi$ flowing through the by-pass line.

3. The device according to claim 1 or 2, characterized in that the measuring means comprises one or a plurality of thermo-couples arranged in series electrically.

4. The device according to any one of the preceding claims, characterized in that the (first) heat exchanger consists of one or more pairs of approximately equal spaces which spaces of each pair are separated from each other by a foil (22) having a low thermal resistance.

5. The device according to claim 4, characterized in that the foil is provided with a number of parallel folds shirred like the bellows of an accordion.

6. The device according to any one of claims 1—3, characterized in that the (first) heat exchanger consists of a plurality of elements arranged consecutively in the direction of the flow in one of the channels (10, 12), said elements alternatingly being made of a thermally well conducting material and of a thermally insulating material, respectively.

7. The device according to any one of the preceding claims, characterized in that the device including its by-pass lines is thermally insulated with respect to the surroundings.

8. The device according to any one of the preceding claims, characterized in that the device and its by-pass lines are enclosed by a shell designed in such a manner that at each location the temperature of said shell is made equal to the mean of the temperatures of the flows of medium present at the said location within said shell.

9. The device according to claim 8, characterized in that the shell (24) consists of a thermally well conductive material the thickness at any location of which is reciprocally proportional to the temperature gradient to be expected of the mean of the temperatures of the flows of medium present at that location within the shell, said shell at the one extremity thereof being arranged in good thermal contact with the one conduit (2) and at the other extremity thereof in good thermal contact with the other conduit (4).

## Patentansprüche

1. Vorrichtung zur Messung der durch ein flüssiges Strömungsmittel oder Medium einer Anlage (1) augenblicklich zugeführten oder entzogenen freien Wärmemenge, wobei die Anlage mit einer Speiseleitung (2) zur Lieferung des Mediums und mit einer Rücklaufleitung (4) zum Abziehen des Mediums versehen ist, wobei die Vorrichtung einen Wärmetauscher (25) mit zwei Kanälen (10, 12), von denen der eine einen Teil einer mit der Speiseleitung verbundenen Überbrückungs- oder Bypass-Leitung (10, 11) und der andere einen Teil einer mit der Rücklaufleitung verbundenen Bypass-Leitung (12, 13) bildet und in denen das Medium in entgegengesetzten Richtungen strömt und jeweils an der gleichen Stelle in den einen dieser Kanäle eintritt und aus dem anderen austritt, sowie eine außerhalb des Wärmetauschers (25) befindliche Meßeinheit (26) zur Messung der Differnz zwischen der Temperatur des in den Wärmetauscher eintretenden strömenden Mediums und der Temperatur des aus dem Wärmetauscher austretenden strömenden Mediums an der genannten Stelle aufweist, wobei diese Temperaturdifferenz der zu messenden Wärmemenge ungefähr proportional ist, dadurch gekennzeichnet, daß die Vorrichtung so ausgelegt ist, daß die beiden Ströme durch den Wärmetauscher (25) bei jeder Strömungs- oder Durchsatzmenge im wesentlichen gleich groß sind und daß

$$z=\frac{k \cdot \phi \cdot \rho \cdot c}{\alpha_w \cdot F_w + \alpha_{ws} \cdot F_{ws}} <<1$$

gilt, mit

$\phi$=Menge des die Anlage pro Zeiteinheit durchströmenden Mediums (m³/s);

k=jede Bypass-Leitung durchströmender Bruchteil oder Anteil der Menge $\phi$;

$\rho$=Dichte des Mediums (kg/m³);

c=spezifische Wärme des Mediums (J/kg . K);

$\alpha_w$=Wärmeübertragungskoeffizient des Wärmetauschers (W/m² . K);

$\alpha_{ws}$=Wärmeübertragungskoeffizient der Meßeinheit (W/m² . K);

$F_w$=Wärmeaustauschfläche des Wärmetauschers (m²);

$F_{ws}$=Wärmeaustauschfläche der Meßeinheit (m²).

2. Vorrichtung zur Messung der durch ein flüssiges Strömungsmittel oder Medium einer Anlage (1) augenblicklich zugeführten oder entzogenen freien Wärmemenge, wobei die Anlage mit einer Speiseleitung (2) zur Lieferung des Mediums und mit einer Rücklaufleitung (4) zum Abziehen des Mediums versehen ist, wobei die Vorrichtung einen ersten Wärmetauscher (25) mit zwei Kanälen (10, 12), von denen der eine einen Teil einer mit einer der Leitungen verbundenen Überbrückungs- oder Bypass-Leitung (10—13) bildet und in denen das Medium in entgegengesetzten Richtungen strömt und jeweils an der gleichen Stelle in den einen dieser Kanäle eintritt und aus dem anderen austritt, sowie eine außerhalb des ersten Wärmetauschers (25) befindliche Meßeinheit (26) zur Messung der Differenz zwischen der Temperatur des in den ersten Wärmetauscher eintretenden strömenden Mediums und der Temperatur des aus dem ersten Wärmetauscher austretenden strömenden Mediums an der genannten Stelle aufweist, wobei diese Temperaturdiffernz der zu messenden Wärmemenge ungefähr proportional ist, dadurch gekennzeichnet, daß in der Bypass-Leitung die beiden Kanäle (10, 12) des ersten Wärmetauschers (25) und der erste Kanal eines zweiten Wärmetauschers (16) miteinander in Reihe angeordnet sind, so daß die beiden Ströme durch die beiden Kanäle des ersten Wärmetauschers und der Strom durch den ersten Kanal des zweiten Wärmetauschers bei jeder Strömungs- oder Durchsatzmenge im wesentlichen gleich groß sind, daß der erste Kanal des zweiten Wärmetauschers zwischen den beiden Kanälen (10, 12) des ersten Wärmetauschers (25) angeordnet ist, während der zweite Kanal des zweiten Wärmetauschers (16) einen Teil der anderen Leitung (4) oder einer weiteren, an letztere angeschlossenen Bypass-Leitung bildet, und daß

$$\frac{1}{1-e^{-p}} \cdot z \ll 1$$

gilt, worin

z die in Anspruch 1 angegebene Bedeutung besitzt, wobei der (genannte) Wärmetauscher der erste Wärmetauscher ist;

und worin bedeuten:

e=Grundzahl des Napierschen bzw. natürlichen Logarithmus; und

$$p=\frac{\alpha_r \cdot F_r}{k \cdot \phi \cdot \rho \cdot c}$$

worin bedeuten:

$\alpha_r$=Wärmeübertragungskoeffizient des zweiten Wärmetauschers;

$F_r$=Wärmeaustauschfläche des zweiten Wärmetauschers;

$\phi$, $\rho$ und c: die in Anspruch 1 angegebene Bedeutung besitzen; und

k=die Bypass-Leitung durchströmender Bruchteil oder Anteil der Menge $\phi$.

3. Vorrichtung nach Anspruch 1 oder 2, dadurch gekennzeichnet, daß die Meßeinheit ein Thermoelement oder mehrere elektrisch in Reihe angeordnete Thermoelemente aufweist.

4. Vorrichtung nach einem der vorangehenden Ansprüche, dadurch gekennzeichnet, daß der (erste) Wärmetauscher aus einem oder mehreren Paaren etwa gleich großer Räume besteht und daß die Räume jedes Paars durch eine Folie (Trennwand) (22) niedrigen Wärmewiderstands voneinander getrennt sind.

5. Vorrichtung nach Anspruch 4, dadurch gekennzeichnet, daß die Folie mit einer Anzahl von parallelen, ähnlich dem Balg eines Akkordeons gefältelten bzw. verschachtelten Falten versehen ist.

6. Vorrichtung nach einem der Ansprüche 1 bis 3, dadurch gekennzeichnet, daß der (erste) Wärmetauscher eine Anzahl von aufeinanderfolgend in Strömungsrichtung in einem der Kanäle (10, 12) angeordneten Elementen umfaßt, die abwechselnd aus einem gut wärmeleitenden Werkstoff bzw. einem Wärmeisoliermaterial hergestellt sind.

7. Vorrichtung nach einem der vorangehenden Ansprüche, dadurch gekennzeichnet, daß sie einschließlich ihrer Bypass-Leitungen gegenüber der Umgebung thermisch isoliert ist.

8. Vorrichtung nach einem der vorangehenden Ansprüche, dadurch gekennzeichnet, daß sie mit ihren Bypass-Leitungen derart in einen Mantel eingeschlossen ist, daß die Temperatur des Mantels an jeder Stelle dem Mittelwert der Temperaturen der an den betreffenden Stellen innerhalb des Mantels vorhandenen Mediumströmen gleich ist.

9. Vorrichtung nach Anspruch 8, dadurch gekennzeichnet, daß der Mantel (24) aus einem gut wärmeleitenden Werkstoff besteht, dessen Dicke an jeder Stelle des Mantels dem zu erwartenden Temperaturgefälle des Mittelwerts der Temperaturen der an der betreffenden Stelle innerhalb des Mantels vorhandenen Mediumströme umgekehrt (reziprok) proportional ist, und daß der Mantel am einen Ende in guter Wärmeberührung mit der einen Leitung (2) und am anderen Ende in guter Wärmeberührung mit der anderen Leitung (4) steht.

**Revendications**

1. Dispositif pour mesurer la quantité de chaleur libre instantanément fournie à ou retirée d'une installation (1) par un fluide, laquelle installation est munie d'un conduit d'alimentation (2) destiné à l'alimentation en fluide et d'un conduit de retour (4) destiné à retirer le fluide, ledit dispositif comprenant un échangeur de chaleur (25) à deux canaux (10, 12) dont l'un fait partie d'une conduite de

**0 024 778**

dérivation (10, 11) raccordée au conduit d'alimentation, et l'autre fait partie d'une conduite de dérivation (12, 13) raccordée au conduit de retour, le fluide s'écoulant dans des directions opposées dans les deux canaux, et entrant dans l'un de ces canux et quittant l'autre au même endroit, et des moyens de mesure (26), à l'extérieur de l'échangeur de chaleur (25), destinés à mesurer la différence entre la température du fluide en écoulement entrant dans l'échangeur de chaleur et la température du fluide en écoulement quittant l'échangeur de chaleur au même endroit, ladite différence de température étant approximativement proportionnelle à la quantité de chaleur destinée à être mesurée, caractérisé en ce ce que le dispositif est conçu de telle manière que les deux écoulements traversant ledit échangeur (25) soient sensiblement analogues pour un débit d'écoulement quelconque, et que:

$$z = \frac{k \cdot \phi \cdot \rho \cdot c}{\alpha_w \cdot F_w + \alpha_{ws} \cdot F_{ws}} \ll 1$$

où:

$\phi$=la quantité de fluide traversant l'installation par unité de temps ($m^3/s$);
$k$=la fraction de $\phi$ traversant chaque conduite de dérivation;
$\rho$=la masse volumique du fluide ($kg/m^3$);
$c$=la chaleur spécifique du fluide ($J/kg \cdot K$);
$\alpha_w$=le coefficient de transmission de chaleur de l'échangeur de chaleur ($W/m^2 \cdot K$);
$\alpha_{ws}$=le coefficient de transmission de chaleur des moyens de mesure ($W/m^2 \cdot K$);
$F_w$=la surface d'échange de chaleur de l'échangeur de chaleur ($m^2$);
$F_{ws}$=la surface d'échange de chaleur des moyens de mesure ($m^2$).

2. Un dispositif pour mesurer la quantité de chaleur libre instantément fournie à ou retirée d'une installation (1) par un fluide, laquelle installation est munie d'un conduit d'alimentation (2) destiné à l'alimentation en fluide et d'un conduit de retour (4) destiné à retirer le fluide, ledit dispositif comprenant un premier échangeur de chaleur (25) comportant deux canaux (10, 12) dont l'un fait partie d'une conduite de dérivation (10, 11) raccordée à l'un desdits conduits, le fluide s'écoulant dans des directions opposées dans les deux canaux et entrant dans l'un de ces canaux et quittant l'autre au même endroit, et des moyens de mesure (26) situés à l'extérieur du premier échangeur de chaleur (25), destinés à mesurer la différence entre la température du fluide en écoulement entrant dans le premier échangeur de chaleur et la température du fluide en écoulement quittant le premier échangeur de chaleur audit endroit, laquelle différence de température est approximativement proportionnelle à la quantité de chaleur à mesurer, caractérisé en ce que, dans la conduit de dérivation, les deux canaux (10, 12) du premier échangeur de chaleur (25) et le premier canal d'un second échangeur de chaleur (16) sont disposés en série l'un avec l'autre de façon à ce que les deux écoulements traversant les deux canaux du premier échangeur de chaleur et l'écoulement traversant le premier canal du second échangeur de chaleur soient sensiblement analogues pour un débit quelconque, le premier canal dudit second échangeur de chaleur étant situé entre les deux canaux (10, 12) dudit premier échangeur de chaleur (25), tandis que le second canal dudit second échangeur de chaleur (16) fait partie de l'autre conduit (4), ou d'une conduit de dérivation supplémentaire raccordée à celui-ci, et que

$$\frac{1}{1-e^{-p}} \cdot z \ll 1$$

où:

$z$=la quantité définie dans la revendication 1, l'échangeur de chaleur étant ainsi le premier échangeur de chaleur;
$e$=le nombre de base du logarithme népérien;

$$p = \frac{\alpha_r \cdot F_r}{K \cdot \phi \cdot \rho \cdot c}$$

où:

$\alpha_r$=le coefficient de transmission de chaleur du second échangeur de chaleur;
$F_r$=la surface d'échange de chaleur du second échangeur de chaleur, et $\phi$, $\rho$, et c sont tels que définis dans la revendication 1,
$k$=la fraction de $\phi$ traversant la conduite de dérivation.

3. Le dispositif selon la revendication 1 ou 2, caractérisé en ce que les moyens de mesure comprennent un ou plusieurs thermo-couples disposés électriquement en série.

4. Le dispositif selon l'une quelconque des revendications précédentes, caractérisé en ce que le (premier) échangeur de chaleur consiste en une ou plusieurs paires d'espaces approximativement égaux, lesquels espaces de chaque paire sont séparés l'un de l'autre par une feuille (22) présentant une résistance thermique faible.

11

5. Le dispositif selon la revendication 4, caractérisé en ce que la feuille est munie d'un certain nombre de pliages parallèles en accordéon.

6. Le dispositif selon l'une quelconque des revendications 1 à 3, caractérisé en ce que le (premier) échangeur de chaleur consiste en plusieurs éléments disposés en succession dans la direction d'écoulement dans l'un des deux canaux (10, 12), lesdits éléments étant alternativement constitués respectivement d'un matériau bon conducteur thermique et d'un matériau mauvais conducteur thermique.

7. Le dispostif selon l'une quelconque des revendications précédentes, caractérisé en ce que le dispositif muni de ses conduites de dérivation est thermiquement isolé de l'environnement.

8. Le dispositif selon l'une quelconque des revendications précédentes, caractérisé en ce que le dispositif muni de ses conduites de dérivation est enveloppé par une coquille conçue de façon à ce que, en chaque endroit, la température de ladite coquille soit rendue égale à la moyenne des températures des écoulements du fluide présent audit endroit à l'intérieur de ladite coquille.

9. Le dispositif selon la revendication 8, caractérisé en ce que la coquille (24) consiste en un matériau bon conducteur thermique, dont l'épaisseur en tout endroit est inversement proportionnelle au gradient de température envisagé de la moyenne des températures des écoulements du fluide présent en cet endroit à l'intérieur de la coquille, ladite coquille étant disposée à l'un de ses extrémités en bon contact thermique avec l'un des conduits (2), et à son autre extrémité en bon contact thermique avec l'autre conduit (4).

# fig-1

# fig-9

# fig-10

0 024 778

Fig-2

Fig-4

2

Fig-3

Fig-5

Fig-6

0 024 778

Fig-7

Fig-8

5

fig-11

fig-12

$V(\mu V)$

160

140

120

100

80

60

40

20

0

0    0,1    0,2    0,3    0,4    0,5

$k\,\phi(cm^3/sec)$